# EUROPEAN PATENT APPLICATION

(11) **EP 0 663 780 A2**
(43) Date of publication of application: **19.07.1995**
(21) Application number: 95300227.6
(22) Date of filing: 13.01.1995
(51) Int. Cl.: H04N 9/797, H04N 9/83

(54) **Video signal recording and playback apparatus**

(30) Priority: 14.01.1994 JP 16012/94
(71) Applicant: VICTOR COMPANY OF JAPAN, LIMITED, Kanagawa-ku Yokohama (JP)
(72) Inventor: Yamada, Hiroshi, Tokyo (JP)
(74) Representative: Senior, Alan Murray

(57) **Abstract**

A video signal recording and playback apparatus which is compatible with both a conventional television system signal and a wide-screen television system signal, such as PAL and PALplus video signals, has a helper signal demodulator (81) and helper signal remodulation circuit (84), respectively connected to input and output sides of a conventional video tape recorder (82, 83). The demodulator serves to demodulate a modulated helper signal contained in the wide-screen system signal, to obtain a baseband-state helper signal which is recorded and reproduced through a luminance signal processing system of a video tape recorder together with the luminance signal component of the video signal, while the remodulation circuit serves to modulate the playback baseband-state helper signal, to recover a modulated helper signal which can be utilized to compensate the playback video signal to achieve enhanced vertical resolution of a resultant display picture.

## Description

### BACKGROUND OF THE INVENTION

### Field of the Invention

The present invention relates to a video signal recording and playback apparatus which is compatible with both a conventional television broadcasting system such as the PAL system and also an enhanced-resolution television broadcasting system having a higher value of aspect ratio than the conventional broadcasting system, such as the PALplus system.

### Description of Prior Art

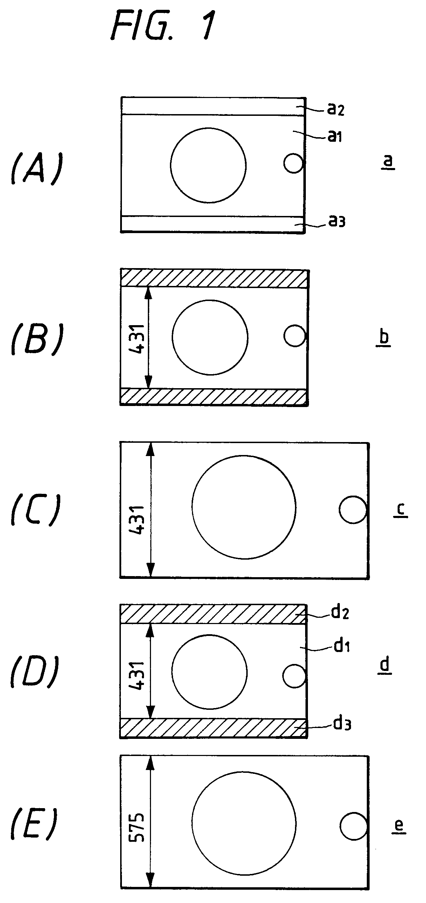

EDTV (Extended Definition television, or high resolution television) is designed to overcome the defects of a conventional television broadcasting system, while being compatible with that conventional system. One example of EDTV is the PALplus system, which provides an improvement in the picture quality of the PAL (Phase Alternation by Line) broadcasting system, while also providing a wide-screen display capability, by producing a picture having a 16:9 aspect ratio. A PALplus video signal can be received on television receivers which have been designed only for reception of conventional PAL broadcasting system signals (in the following, such a television receiver will be referred to as a conventional television receiver). To achieve such compatibility, a letter-box technique is used, which will be described referring to diagram (A) in Fig. 1, which shows an example of a PALplus picture. That consists of upper and lower portions a2, a3 which do not contain actual picture content, and which are disposed above and below a main portion a1. The main portion a1 contains the actual picture content of each frame of the television signal, and the part of the PALplus video signal which expresses the main portion a1 will be referred to in the following as the main signal.

When such a PALplus video signal is received by a conventional television receiver, the main portion a1 is compressed in size within a conventional display screen (having the PAL standard aspect ratio of 4:3), to provide a wide-screen picture. However that wide-screen picture is formed by only 431 scanning lines, with the remaining scanning lines forming the aforementioned upper and lower portions, which are blank (i.e. do not contain actual picture content), as shown in diagram (B) of Fig. 1. Thus the wide-screen picture that is obtained by utilizing a conventional television receiver to receive a PALplus video signal has a lowered degree of vertical resolution, by comparison with the conventional PAL system picture.

When the PALplus video signal is received by a conventional television receiver which has a wide screen, having an aspect ratio of 16:9, then as can be understood from diagram (C) of Fig. 1, although the central portion a1 of the PALplus system picture can be made to fill the entire screen of the television receiver, there is the same lowering of vertical resolution, since the number of scanning lines per frame is still only 431.

On the other hand, when the PALplus video signal is received by a television receiver (having an aspect ratio of 16:9) which is designed for PALplus reception, then there is an improvement of vertical resolution. That is due to the fact that an auxiliary signal, referred to as a helper signal, is conveyed encoded within the PALplus video signal. The helper signal contains information relating to the main signal, and occurs during intervals in the PALplus video signal which correspond to the aforementioned portions a2, a3 of diagram (A), i.e. which contain no actual picture content. The helper signal information is used, by a television receiver which is designed for operation with a PALplus system video signal, to enhance the main signal such as to provide enhanced vertical resolution in the displayed wide-screen picture.

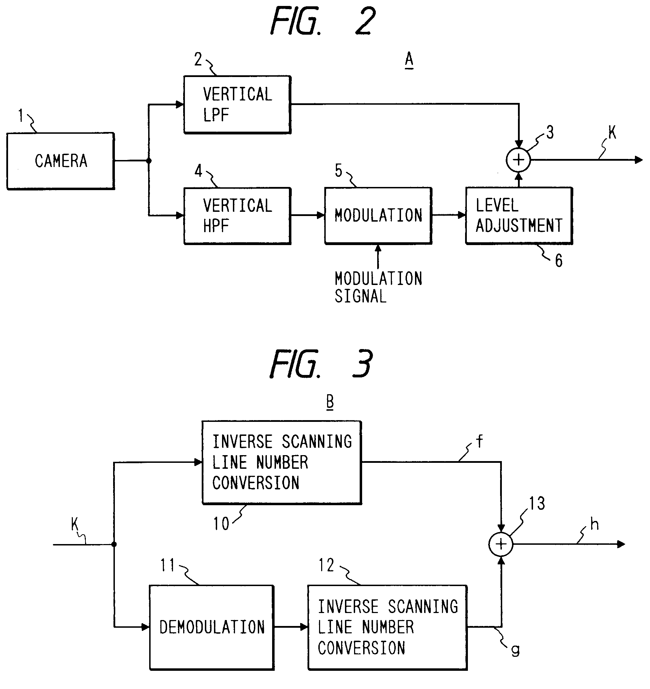

The PALplus basic encoding algorithm, which is used to encode the helper signal within the PALplus video signal, is illustrated in simplified form in Fig. 2. The wide-screen video signal is produced by a television camera 1, having a capability for photographing a picture having an aspect ratio of 16:9. The wide-screen video signal conforms to a 625/50/2:1 standard, i.e. PAL system video signal having two fields/frame, 625 scanning lines/frame, 50 fields/second, and interlace scanning. The wide-screen video signal produced from the camera 1 has 575 valid picture scanning lines/frame and is supplied to a vertical low-pass filter and scanning line converter section 2, in which vertical low-pass filtering and line number conversion (by a 4-3 conversion factor) are performed to obtain a wide-screen video signal having a main signal consisting of 431 valid picture scanning lines/frame. That video signal is supplied to one input of a video signal combiner 3. In addition, the wide-screen video signal produced from the camera 1 is supplied to a vertical high-pass filter and scanning line conversion section 4, in which high-pass filtering and scanning line conversion (by a 4-1 conversion factor) are executed, to obtain a wide-screen video signal having 144 valid scanning lines/frame. That signal is then applied in a modulator 5 to modulate a signal of frequency 4.43 MHz, which is the same frequency as that of the color subcarrier (i.e. of the color burst signal), using the VSB (vestigial sideband modulation) form of amplitude modulation. The resultant AM modulated signal is transferred through a level adjuster 6, wherein the signal level is set to a low value (300 mV p-p), and the resultant AM modulated helper signal is then supplied to the other input of the video signal combiner 3. The video signal combiner 3 is controlled such that in each frame of the resultant encoded video signal, scanning lines of the output signal from the vertical low-pass filter 2 are inserted during time intervals corresponding to the main signal portion a1 shown in diagram (A) of Fig. 1, whereas scanning lines of the helper signal produced from the level adjuster 6 are inserted only within intervals corresponding to the aforementioned portions a1 and a2, which contain no actual picture content.

As a result, an encoded video signal, which is a combination of the main signal and helper signal, is produced from the video signal combiner 3. Such an encoded video signal will be designated in the following as signal k.

When such an encoded video signal k is supplied to a conventional television receiver (having a screen with an aspect ratio of 4:3) then the number of valid scanning lines is 431 lines/frame as described above, rather than 575 lines/frame, so that the wide-screen picture shown in diagram (D) of Fig. 1 is obtained, having lowered vertical resolution. In diagram (D), d2 and d3 denote the parts of the display which do not have actual picture content, and into which the helper signal has been inserted. In general, the video signal is a composite video signal containing a luminance signal and a color signal (sometimes referred to as the chroma signal) which is frequency-multiplexed with the luminance signal. Since the helper signal has been AM-modulated onto the color subcarrier frequency, when the resultant encoded video signal is subjected to separation of the luminance signal (Y signal) and color signal (C signal) by a Y/C separator (not shown in the drawing), the helper signal is primarily treated as a C signal, in the signal processing. However since the average level of the AM modulated helper signal is close to the blanking level of the video signal, and contains no DC components, it is not conspicuous on the screen of the television receiver.

When such an encoded video signal k is supplied to a television receiver which has been designed for use with the PALplus system, then due to the enhanced resolution provided by the action of the helper signal, there is no deterioration of the vertical resolution, i.e. the number of valid scanning lines utilized by the television receiver is the same number (575 valid scanning lines/frame) as is produced by the camera 1. As a result, a high resolution picture e, as shown in diagram (E) of Fig. 1 is obtained, which occupies the entire screen area of the television receiver.

A television receiver which supports the PALplus system applies a PALplus basic decoding algorithm B which is shown in simplified form in Fig. 3, to decode the encoded video signal k, and the resultant video signal is then processed by conventional video signal processing circuits in the television receiver, to produce a picture having high vertical resolution and an aspect ratio of 16:9. The PALplus basic decoding algorithm B has of course a complementary relationship to the PALplus basic encoding algorithm A.

The basic features of the PALplus basic decoding algorithm B are as follows. When the encoded video signal k is supplied to a television receiver, it is branched between a main signal system and a helper signal system. In the main signal system, the encoded video signal k is supplied to a vertical low pass filter and scanning line converter section 10, in which vertical low-pass filtering and inverse scanning line conversion (by a 3 - 4 conversion factor) are performed, whereby the number of valid scanning lines is changed from 431 to 575 lines/frame. The resultant signal is supplied to one input of a video signal combiner 13. In the helper signal system, the encoded video signal is first supplied to a demodulator circuit 11, and the resultant demodulated signal is supplied to a vertical high-pass filter and inverse scanning line number converter section 12, and is subjected to vertical high-pass filtering and inverse scanning line conversion (by a conversion factor of 1 - 4) to obtain a wide-screen video signal g which has been converted from 144 to 575 valid scanning lines/frame. That signal is supplied to the other input of the video signal combiner 13. The video signal combiner 13 combines the wide-screen video signal f from the main signal system, having 575 valid scanning lines/frame, with the wide-screen video signal g having 575 valid scanning lines/frame that is produced from the helper signal system, to produce a decoded video signal h, which provides a display picture having enhanced vertical resolution.

In practice, the main signal consists of a color signal and luminance signal, and the helper signal is combined with the luminance signal to achieve the desired enhancement of vertical resolution.

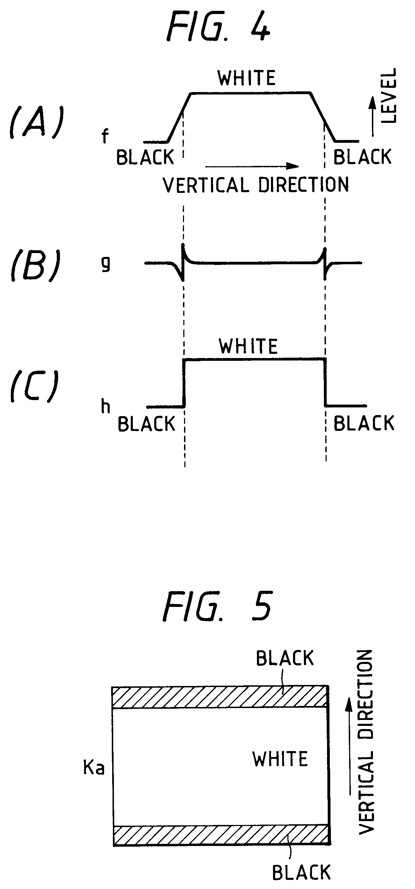

Diagrams (A) to (C) of Fig. 4 illustrate changes in video signal level for the respective signals f, g and h of Fig. 3, in the vertical scanning direction, for the case in which the television picture is of the form shown in Fig. 5. In Fig. 5 the central portion of the picture is at the white level, while the upper and lower portions are at the black level. As can be understood from diagram (C) of Fig. 4, the effect is to achieve an increase in vertical resolution of the displayed television picture.

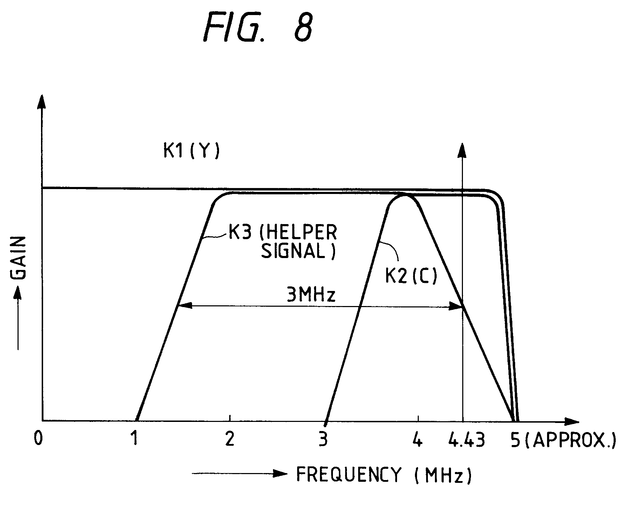

The case will be considered in which a composite video signal consisting of the encoded video signal k described above is recorded and played back by a VTR (video tape recorder) which has been designed only for recording and playback of the standard PAL system video signal. Such a VTR will be referred to in the following as a conventional VTR (as defined hereinabove). The frequency spectrum of the encoded video signal k is shown in Fig. 8. As shown, the frequency spectrum components of the encoded video signal are those of a luminance signal k1 and a color signal k2, which together constitute the main signal of the encoded video signal, and the frequency spectrum of the AM modulated helper signal, designated as k3.

The lowest frequency of the luminance signal k1 is 0 MHz and the upper limit frequency is approximately 5 MHz, with the passband being substantially flat, maintained at the maximum amplitude up to a frequency slightly below 5 MHz then rapidly falling, at a frequency which is slightly below 5 MHz. The frequency spectrum of the color signal k2 is centered on the 4.43 MHz frequency of the color subcarrier, with the lower frequency limit being 3 MHz and the upper limit frequency being approximately 5 MHz (i.e. 4.43 MHz + 0.5 MHz). That is to say, the upper limit frequency of that signal, approximately 5 MHz, is approximately the same as that of the luminance signal k1.

The helper signal k3 frequency spectrum has a lower frequency limit of approximately 1.3 MHz, i.e. approximately 3 MHz lower than that of the color burst frequency, and an upper frequency limit of 5 MHz, i.e. approximately the same as the upper frequency limits of the luminance signal k1 and color signal k2. The helper signal k3 is AM modulated at 4.43 MHz.

Prior to being AM modulated at the color subcarrier frequency, the helper signal is a baseband signal which has the same basic characteristics as the luminance signal k1 of the main signal. However when a conventional VTR receives the encoded video signal k, then since the modulated helper signal is directly supplied to the color signal system of the VTR, it is subjected to hand-pass filtering processing and also to a narrowing of the signal bandwidth (to become approximately from 3 MHz to 5 MHz). The bandwidth of the helper signal thus becomes very limited, and the resultant helper signal is no longer capable of being applied to compensate the luminance signal such as to achieve the aforementioned increase in vertical resolution. This is a serious problem, whereby a video signal such as a PALplus video signal cannot be recorded and played back by a conventional VTR such as to provide a satisfactory playback video signal.

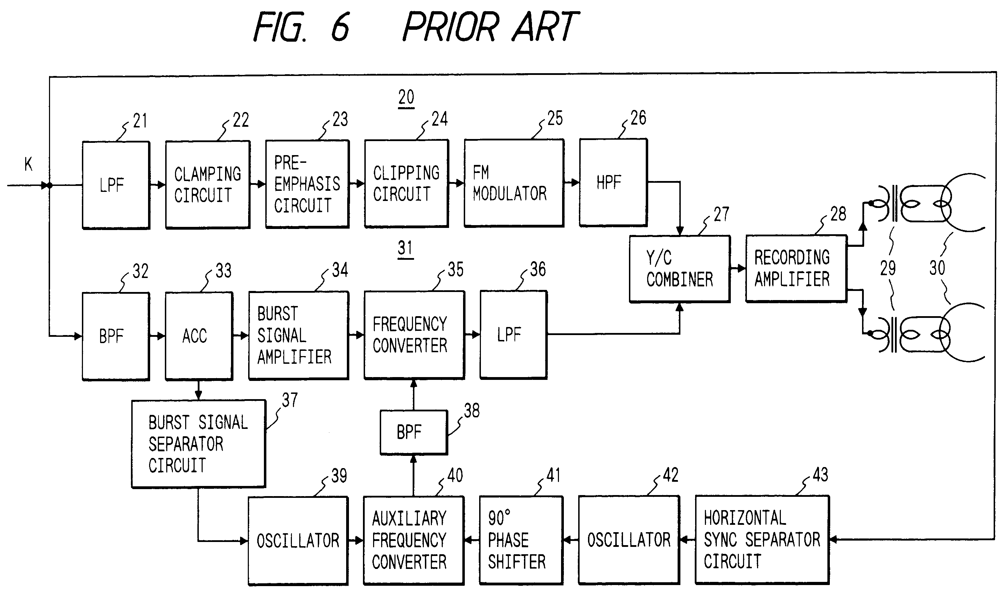

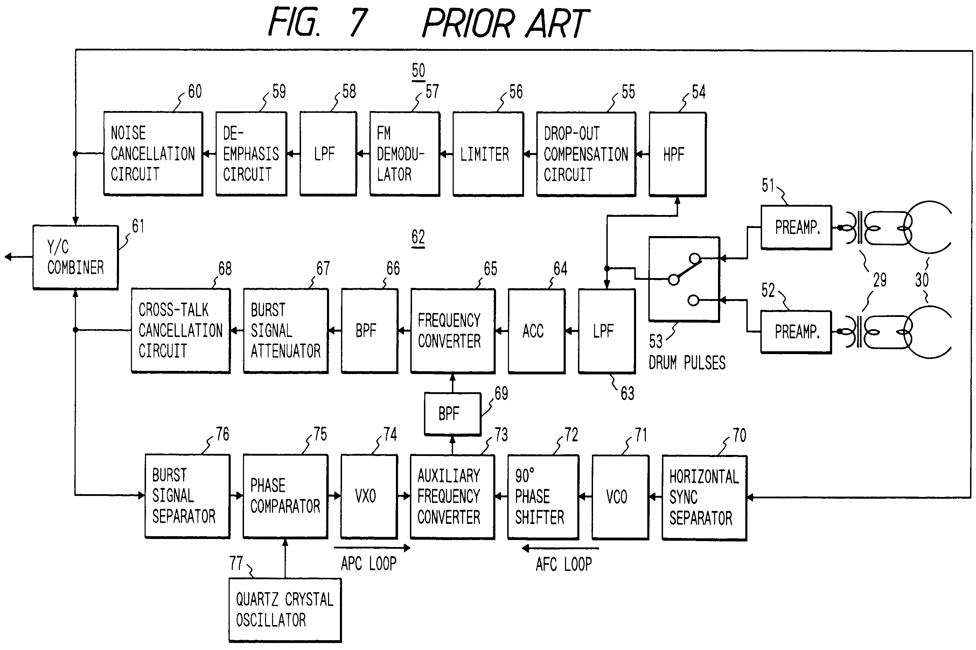

The configuration of a conventional VTR recording and playback system will be described in the following. The recording system of a conventional VTR consists of a luminance signal recording system 20 and color signal recording system 31, having the configuration shown in Fig. 6. The playback system of a conventional VTR consists of a luminance signal playback system 50 and color signal playback system 62, having the configuration shown in Fig. 7. As shown in Fig. 6, the luminance signal recording system 20 basically consists of a low-pass filter 21, a clamping circuit 22, a pre-emphasis circuit 23, a clipping circuit 24, an FM modulator 25, and a high-pass filter 26, with the resultant signal being supplied to one input of a Y/C combiner 27. The output signal from the Y/C combiner 27 is supplied through a recording amplifier 28 and rotary transformer 29 to video heads 30.

Also as shown in Fig. 6, the color signal recording system 31 basically consists of a bandpass filter 32, a ACC (automatic color control) circuit 33, a burst signal amplifier 34, a frequency converter 35, a low-pass filter 36, a burst separator circuit 37, a bandpass filter 38, an oscillator 39, a auxiliary frequency converter 40, a 90^{o} phase shifter 41, an oscillator 42, and a horizontal synchronizing signal separator circuit 43.

As shown in Fig. 7, the luminance signal playback system 50 basically consists of (in addition to the video heads 30 and rotary transformer 29) preamplifier circuits 51, 52, a switch circuit 53, a high-pass filter 54, a drop-out compensation circuit 55, a limiter 56, a FM demodulator 57, a low-pass filter 58, a de-emphasis circuit 59, a noise elimination circuit 60, and a Y/C combiner 61. The color signal playback system 62 basically consists of a low-pass filter 63, a ACC circuit 64, a frequency converter 65, a bandpass filter 66, a burst signal attenuator 67, a crosstalk elimination circuit 68, a horizontal synchronizing signal separator 70, a VCO (variable frequency control oscillator) 71, a 90^{o} phase shifter 72, a auxiliary frequency converter 73, a VXO (variable-frequency quartz crystal oscillator) 74, a phase comparator 75, a burst signal separator 76, and a quartz crystal oscillator 77.

The recording/playback operation on the encoded video signal is as follows:

### (During Recording)

When the encoded video signal k is supplied to the video signal input terminal of a conventional VTR, the low-pass filter 21 (which is the input stage of the luminance signal recording system 20, and has a cut-off frequency of approximately 3 MHz) extracts the luminance signal of the main signal, and part of the helper signal, and supplies these to the clamping circuit 22. The clamping circuit 22 performs DC level restoration of the luminance signal, and executes signal processing whereby the leading edges of the synchronizing signal occur at the correct time point in each frame. The resultant signal is supplied to the pre-emphasis circuit 23, which performs pre-emphasis processing prior to FM modulation, whereby luminance signal portions which correspond to image outline portions are emphasized, for obtaining an improved S/N ratio for the playback luminance signal. The resultant signal is supplied to the clipping circuit 24, which executes white level and black level clipping of the luminance signal, to limit the FM modulation frequency range and prevent black/white inversion by over-modulation. The output signal from the clipping circuit 24 is supplied to the FM modulator 25 to be FM modulated, and the FM modulated luminance signal is supplied to the high-pass filter 26. The high-pass filter 26 eliminates the sidebands of the FM modulated luminance signal, and the resultant signal is supplied to the Y/C combiner 27, to be combined (by frequency multiplexing) with a down-converted color under signal that is produced from the low-pass filter 36 which is the output stage of the color signal recording system 31. The combined signal is then amplified to a predetermined level by the recording amplifier 28, then supplied to the video heads 30, which are mounted at opposing positions on the rotary head drum, to perform helical scanning of a magnetic tape and thereby record successive signal tracks on the tape.

At the same time, when the encoded video signal k is supplied to the input terminal of the conventional VTR, the bandpass filter 32 (having a center frequency of 4.43 MHz which is identical to the color subcarrier frequency, and having a passband of approximately from 3 MHz to 5 MHz) extracts the color signal (including the color burst signal) and the helper signal which is AM modulated at the color subcarrier frequency, and supplies these to the ACC circuit 33. The ACC circuit 33 adjusts the level of the color signal supplied from the bandpass filter 32 to a fixed value, and supplies the resultant signal to each of the burst signal amplifier 34 and the burst signal separator circuit 37. The burst signal amplifier 34 amplifies only the color burst signal, to achieve an improvement of S/N ratio during playback, and supplies the resultant signal to the frequency converter 35, which performs frequency down-conversion and supplies the resultant down-converted color signal (sometimes referred to as the "color under" signal) to the low-pass filter 36. The low-pass filter 36 removes unwanted high frequency components of that signal, and supplies the resultant down-converted color signal to one input of the Y/C combiner 27. On the other hand, the burst signal separator circuit 37 separates the color burst signal and supplies it to the oscillator 39. The oscillator 39 generates a reference frequency oscillation signal that is synchronized with the color burst signal, and supplies that reference frequency signal to the auxiliary frequency converter 40. The horizontal synchronizing signal separator circuit 43 separates the horizontal synchronizing signal from the encoded video signal k, and supplies the horizontal synchronizing signal to the oscillator 42. The oscillator 42 generates a down-conversion frequency signal, based on the horizontal synchronizing signal, having a frequency that is approximately 40 times that of the horizontal synchronizing signal, and supplies that signal to the 90^{o} phase shifter 41. The 90^{o} phase shifter 41 performs conversion to a signal whose phase is changed by 90^{o} once in each horizontal scanning interval, in order to eliminate interference between the contents of adjacent signal tracks at the time of playback. The resultant signal is supplied to the auxiliary frequency converter 40. The auxiliary frequency converter 40 adds together the output signals from the oscillator 39 and 90^{o} phase shifter 41, and supplies the resultant signal to the bandpass filter 38. The bandpass filter 38 filters that signal, to leave only a carrier which is within a predetermined bandwidth, which is supplied to the frequency converter 35.

### (During Playback)

The video signal that has been recorded on the magnetic tape (not shown in the drawings) by the luminance signal recording system 20 and color signal recording system 31 of the conventional VTR is played back by the luminance signal playback system 50 and the color signal playback system 62, as follows.

In the luminance signal playback system 50, the signal recorded on the magnetic tape is obtained as two playback signals by the pair of video heads 30, and transferred from the rotary transformer 29 to the amplifiers 51, 52. After amplification in these, the signals are converted to a continuous playback signal by the action of the switch circuit 53, whose operation is synchronized with that of the rotary head drum. The resultant playback signal is supplied to the high-pass filter 54, and to the low-pass filter 63 of the color signal playback system 62. The high-pass filter 54 extracts the playback FM luminance signal (which occupies a high range of frequencies) from the playback signal, and supplies that FM luminance signal to the drop-out compensation circuit 55. When drop-out of the playback video signal occurs, due to defects on the magnetic tape, the drop-out compensation circuit 55 executes drop-out compensation by replacing any defective horizontal scanning line in the signal by the preceding horizontal scanning line. The resultant playback luminance signal is supplied to the limiter 56, which eliminates fluctuations in amplitude of the playback FM luminance signal, and the signal thereby obtained is supplied to the FM demodulator 57. The FM demodulator 57 performs FM demodulation, and supplies the resultant playback luminance signal to the low-pass filter 58. The low-pass filter 58 removes high frequency carrier components remaining in the playback luminance signal, and supplies the resultant signal to the de-emphasis circuit 59, which restores the respective amplitudes of high-frequency components which existed in the luminance signal prior to recording, to their original levels. The noise elimination circuit 60 then eliminates noise which is distributed in the high frequency range of the playback luminance signal spectrum, and supplies the resultant playback luminance signal to the Y/C combiner 61.

At the same time, the playback signal from the switch circuit 53 is supplied to the low-pass filter 63 of the color signal playback system 62, whereby the playback down-converted color signal (which occupies a lower frequency range than that of the FM luminance signal) is extracted from the playback signal, and supplied to the ACC (automatic color control) circuit 64. The ACC circuit 64 sets the signal level to a fixed value, and outputs the resultant down-converted color signal to the frequency converter 65, which performs inverse frequency up-conversion of the signal at the color subcarrier frequency, and supplies the resultant signal to the bandpass filter 66. The bandpass filter 66 restrict the color signal to within a frequency band that is centered on the color subcarrier frequency, and supplies the resultant color signal to the burst signal attenuator 67. The burst signal attenuator 67 restores to its original value the color burst signal amplitude, which had been increased prior to recording. The resultant playback color signal from the burst signal attenuator 67 is supplied to the crosstalk elimination circuit 68, which removes cross-talk components which arise between adjacent signal tracks on the magnetic tape, and supplies the resultant playback color signal to each of the Y/C combiner 61 and the burst signal separator 76. The Y/C combiner 61 performs frequency multiplexing of the playback color signal and playback luminance signal, to obtain a composite video signal, i.e. to restore the original encoded video signal k. On the other hand, the playback color signal that is supplied to the burst signal separator 76 has the color burst signal extracted therefrom, to be supplied to the phase comparator 75, which also receives the oscillation signal from the quartz crystal oscillator 77. The quartz crystal oscillator 77 functions as a frequency reference signal for playback operation. The phase comparator 75 detects phase deviations between the reference signal from the quartz crystal oscillator 77 and the color burst signal from the burst signal separator 76, to obtain a detection signal which is supplied to the VXO (variable frequency quartz crystal control oscillator) 74. The VXO 74 generates an oscillation signal whose phase is controlled in accordance with the detection signal, and supplies that oscillation signal to the auxiliary frequency converter 73. The horizontal synchronizing signal separator 70 separates the horizontal synchronizing signal from the playback luminance signal, and supplies the horizontal synchronizing signal to the VCO (voltage-controlled oscillator) 71. Based on that horizontal synchronizing signal, the VCO 71 generates an up-conversion frequency signal having a frequency that is 40 times that of the horizontal synchronizing signal, and supplies that signal to the 90^{o} phase shifter 72. The 90^{o} phase shifter 72 executes 90^{o} phase shifting once in each horizontal scanning interval, to eliminate interference which occurs between adjacent tracks during playback, and supplies the resultant signal to the auxiliary frequency converter 73. The auxiliary frequency converter 73 adds together the oscillation signal supplied from the VXO 74 and the oscillation signal (which contains jitter), from the 90^{o} phase shifter 72, and supplies the resultant signal to the bandpass filter 69, to be limited to within a specific bandwidth. The resultant carrier is supplied to the frequency converter 65.

Thus, it is possible using a conventional VTR to record and play back the encoded video signal k by using a conventional VTR. However as described above, the helper signal within the encoded video signal k is AM modulated at the color subcarrier frequency. As a result, when the encoded video signal k is recorded and played back by such a conventional VTR, the helper signal is passed into the color signal processing system, and is subjected therein to frequency down-conversion processing, while at the same time the signal bandwidth is narrowed (to approximately from 3 MHz to 5 MHz). Hence, due to the fact that the helper signal bandwidth is extremely limited, the resultant helper signal which remains in the playback video signal produced from the Y/C combiner 61 does not have a satisfactory frequency spectrum for use in enhancing the resolution of the playback luminance signal, i.e. such a helper signal cannot be used to improve the quality of the main signal within the playback video signal. Moreover, the part of the helper signal which passes through the luminance signal system is subjected to gain distortion, phase distortion, jitter, etc., i.e. the specific types of signal distortion which occur in a VTR, and so that helper signal cannot be successfully combined with the helper signal which passes through the color signal processing system of the VTR.

It can thus be understood that there is a problem in utilizing a conventional VTR whereby the encoded video signal cannot be recorded and played back such as to provide a helper signal which can be used to enhance picture quality by an increase in vertical resolution.

### SUMMARY OF THE INVENTION

It is an objective of the present invention to overcome the problems of the prior art set out above, by providing a video signal recording and playback apparatus whereby such an encoded video signal, and in particular a PALplus video signal, can be recorded and played back without significant deterioration of the helper signal that is contained in the encoded video signal.

To achieve that objective, a video signal recording and playback apparatus according to the present invention includes means for demodulating the AM modulated helper signal prior to recording, to thereby convert the helper signal to the baseband signal state, so that the helper signal can be transferred through the luminance signal processing system of the VTR during recording, and means for modulating the resultant baseband-state helper signal following playback, to restore the helper signal to its original AM modulated condition. In that way, the problem described above can be overcome.

More specifically, the present invention provides a video signal recording and playback apparatus for recording and playback of a first type of video signal which is in accordance with a predetermined television broadcasting system and of a second type of video signal, the second type of video signal comprising a main signal and a modulated helper signal, the modulated helper signal having been derived by modulation of a baseband-state helper signal which is in a baseband signal condition, the main signal being compatible with the predetermined television broadcasting system and expressing successive pictures having an aspect ratio which is different from an aspect ratio of pictures expressed by the first type of video signal, the modulated helper signal expressing auxiliary information relating to the main signal, wherein the video signal recording and playback apparatus comprises:
demodulator means for demodulating said modulated helper signal to obtain the baseband-state helper signal;
recording and playback means for recording and subsequent playback of at least the baseband-state helper signal and the main signal to obtain a playback video signal comprising at least a playback baseband-state helper signal; and
remodulation means for modulating the playback baseband-state helper signal to obtain a video signal containing at least a remodulated helper signal.

In general, the invention is applicable to a video signal recording and playback apparatus wherein the recording and playback means comprises a luminance signal processing system and a color signal processing system, the first type of video signal comprises a luminance signal and a color signal, wherein the remodulation means executes the modulating of the playback baseband-state helper signal using a modulation signal having a frequency which is identical to a color subcarrier frequency of the predetermined television broadcasting system, and wherein the recording and playback means executes recording and playback of the baseband-state helper signal through the luminance signal processing system

In that case, the playback video signal includes a color burst signal, and the apparatus may further comprise circuit means for deriving the modulation signal as a signal which is synchronized with the color burst signal of the playback video signal.

Alternatively, since the playback color signal is a frequency down-converted color signal and the video signal recording and playback apparatus will include frequency converter means for executing frequency up-conversion of the playback color signal and oscillator means for supplying a phase-controlled oscillation signal to operate the frequency converter means, the phase-controlled oscillation signal may also be utilized as the modulation signal.

### BRIEF DESCRIPTION OF THE DRAWINGS

Fig. 1 shows examples of wide-screen television pictures, produced by a television receiver which receives a PALplus video signal;
Fig. 2 is a diagram for use in describing a PALplus basic encoding algorithm;
Fig. 3 is a diagram for use in describing a PALplus basic decoding algorithm;
Fig. 4 shows examples of signal level variations, for use in describing the operation of the PALplus basic decoding algorithm, and Fig. 5 shows a television picture corresponding to Fig. 4;
Fig. 6 is a block diagram of an example of a prior art VTR recording system;
Fig. 7 is a block diagram of an example of a prior art VTR playback system;
Fig. 8 is a frequency spectrum diagram for use in describing the operation of a video signal recording and playback apparatus according to the present invention;
Fig. 9 is a block diagram of an embodiment of a video signal recording and playback apparatus according to the present invention;
Fig. 10 is a block diagram of a first embodiment of a helper demodulation circuit which is used in the video signal recording and playback apparatus of Fig. 9;
Fig. 11 is a waveform diagram for illustrating an AM modulated helper signal in a PALplus video signal;
Fig. 12 is a corresponding waveform diagram for illustrating a baseband-state helper signal produced by demodulation prior to recording by the apparatus of the invention;
Fig. 13 is a block diagram of a first embodiment of a helper signal remodulation circuit;
Figs. 14A and 14B are partial block diagrams showing respective modifications of the video signal recording and playback apparatus of Fig. 9, incorporating a circuit for removal of jitter from playback signals;
Fig. 15 is a block diagram of a second embodiment of a helper remodulation circuit; and
Fig. 16 is a spectrum diagram, for use in describing the apparatus of Fig. 9.

### DESCRIPTION OF PREFERRED EMBODIMENTS

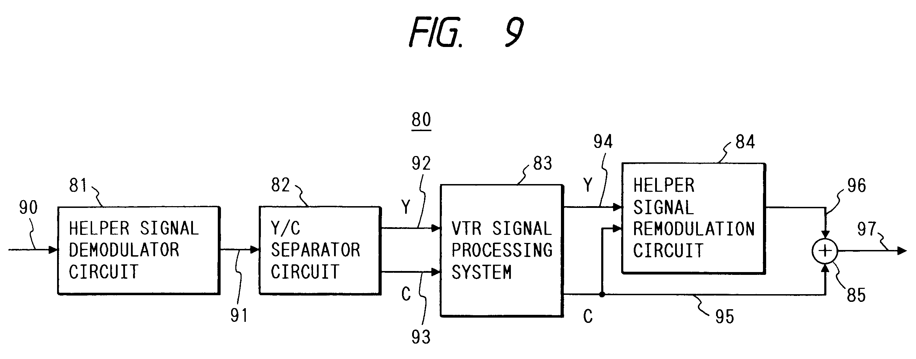

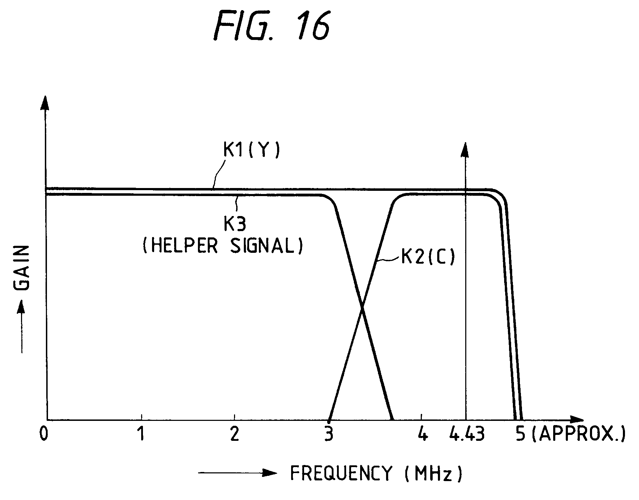

A video signal recording and playback apparatus according to the present invention will be described in the following, referring to Figs. 9 to 16. Fig. 9 is a general block diagram for showing the basic features of such an apparatus, in which a video signal recording and playback apparatus 80 according to the present invention is used for recording and playback, in accordance with the PAL system, of a PALplus system video signal (i.e. the encoded video signal k, described above) which is supplied via an input line 90. As described above, the PALplus system video signal is made up of a main signal (i.e. combination of a color signal and luminance signal) and an AM modulated helper signal. The main signal expresses a sequence of high quality video signals having an aspect ratio (16:9), as opposed to the aspect ratio (4:3) of the PAL system. The modulated helper signal has been derived by AM modulation using a baseband helper signal whose frequency spectrum, designated as k3, is shown in Fig. 16, at a modulation carrier frequency which is identical to the color subcarrier frequency frequency (4.43 MHz). In addition to the information contained in the helper signal which is used (as illustrated in Fig. 4 above) to enhance the vertical picture resolution, the helper signal also contains other picture-related information. That information is conveyed as signalling bits, occurring within the valid picture region of a specific horizontal scanning line (for example line 23H), and includes information specifying an aspect ratio, and also reference amplitude information concerning the main signal and helper signal.

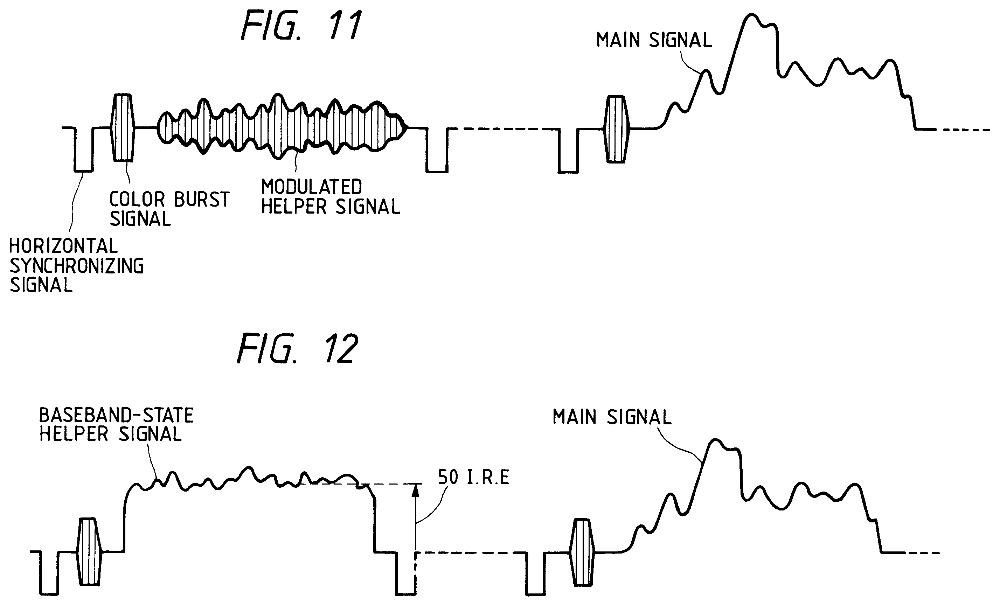

An example of the input PALplus video signal supplied to the video signal recording and playback apparatus 80 is shown in Fig. 11, which shows waveforms of a scanning line containing the AM modulated helper signal, and a scanning line containing the main signal (with only the luminance signal component of the main signal being shown, for simplicity).

The video signal recording and playback apparatus 80 is made up of a helper signal demodulator circuit 81 which receives the input PALplus video signal, a conventional VTR which consists of a luminance and color signal separator circuit (Y/C separator circuit) 82 which receives an output video signal from the helper signal demodulator circuit 81 via a line 91, and a VTR signal processing system 83 which executes video signal recording and playback processing, and a helper signal remodulation circuit 84. The Y/C separator 82 and the VTR signal processing system 83, in combination, can be of identical configuration to the conventional VTR of Figs. 6 and 7 described above, while a signal combiner 85 (which combines an output luminance signal and helper signal produced from the helper signal remodulation circuit 84 with the playback color signal to obtain a composite color video signal) corresponds to the Y/C combiner 61 in Fig. 7.

When the input video signal supplied to line 90 is a PALplus video signal, the helper signal demodulator circuit 81 demodulates the modulated helper signal (having the frequency spectrum of signal k3 in Fig. 8) to obtain the baseband-state helper signal (having the frequency spectrum of signal k3 in Fig. 16), and supplies that signal to the Y/C separator 82. The Y/C separator 82 is made up of a low-pass filter and a bandpass filter, corresponding to the low-pass filter 21 and bandpass filter 32 respectively in the circuit of Fig. 6 described above. The low-pass filter extracts only the luminance signal and most of the baseband-state helper signal from the video signal that is supplied from the helper signal demodulator circuit 81, and has a cut-off frequency of approximately 3 MHz. The bandpass filter has the same bandwidth of approximately from 3 MHz to 5 MHz and a center frequency at the color subcarrier frequency of 4.43 MHz, as for the bandpass filter 32, to thereby extract only the color signal from the video signal that is supplied from the helper signal demodulator circuit 81. The luminance signal (with baseband-state helper signal) and color signal thus extracted by the Y/C separator 82, are transferred via lines 92, 93 to the VTR signal processing system 83.

As a result of the major part of the baseband-state helper signal being outputted from that low-pass filter of the Y/C separator 82, almost all of the baseband-state helper signal is processed in the luminance signal system of the VTR signal processing system 83. That luminance signal system is identical in configuration to the combination of the luminance signal recording system 20 and luminance signal playback system 50 of a conventional VTR, shown in Figs. 6 and 7 and described above.

The VTR signal processing system 83 further includes a color signal system which is identical in configuration to the color signal recording system 31 and color signal playback system 62 of the conventional VTR, shown in Figs. 6 and 7. The VTR signal processing system 83 performs recording and playback processing, through the luminance signal recording system 20 and the luminance signal playback system 50 respectively, of the luminance signal part of the main signal and the baseband-state helper signal which are contained in the video signal supplied from the Y/C separator 82, and executes recording and playback processing of the color signal component of the color signal part of the main signal (including the color burst signal) by the color signal recording system 31 and color signal playback system 62 respectively. The operations of video signal playback and recording are identical to those described above referring to Figs. 6 and 7 for both the luminance signal and color signal systems, so that further description will be omitted.

The helper signal remodulation circuit 84 receives the playback video signal that is produced from the VTR signal processing system 83, i.e. receives the playback luminance signal (with the playback baseband-state helper signal) and playback color signal, transferred from the VTR signal processing system 83 via lines 94 and 95 respectively. The playback baseband-state helper signal modulates a carrier which is at the color subcarrier frequency, in the helper signal remodulation circuit 84, i.e. in the same manner as was applied when generating the modulated helper signal originally, to obtain a remodulated helper signal.

In describing the video signal recording and playback apparatus 80 shown in Fig. 9, it has been assumed that only the VTR signal processing system 83 is part of a VTR which supports the PAL system. However it would of course be equally possible for all of the helper signal demodulator circuit 81, Y/C separator 82, VTR signal processing system 83 and helper signal remodulation circuit 84 to be built into a VTR which supports both PAL system and the PALplus system video signals.

In addition, although in the above the helper signal demodulator circuit 81 and helper signal remodulation circuit 84 have been described as completely separate circuits, it would be possible to utilize substantial parts of these circuits in common to perform the functions of both the helper signal demodulator circuit 81 and helper signal remodulation circuit 84.

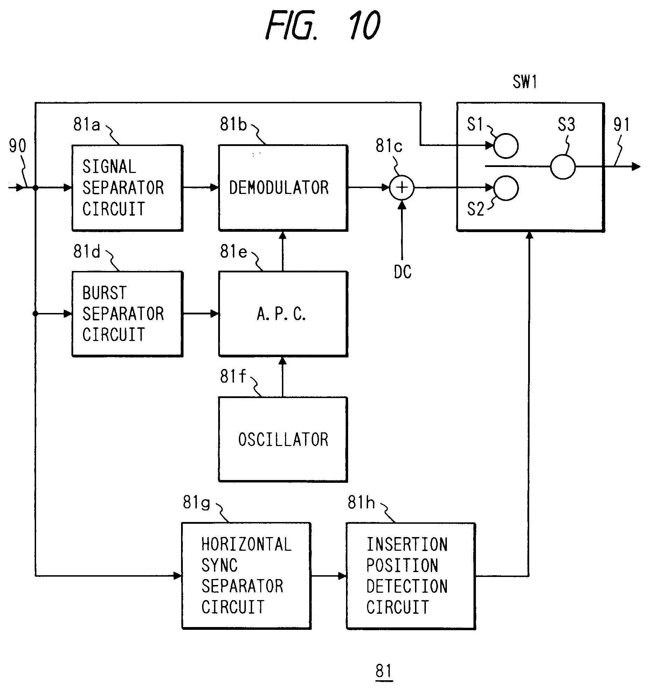

The circuit configuration and operation of the helper signal demodulator circuit 81 in the video signal recording and playback apparatus 80 of Fig. 9 will be described referring to Fig. 10. The helper signal demodulator circuit 81 is made up of a helper signal separator circuit 81a, helper signal demodulator 81b, a burst signal separator circuit (burst separator) 81d, a jitter elimination circuit (automatic phase control circuit) 81e, an oscillator circuit 81f, a horizontal synchronizing signal separator 81g, an insertion position detection circuit 81h, a level adjuster 81c, and a switch SW1.

The operation of the helper signal demodulator circuit 81 is as follows. The input PALplus system video signal is supplied to each of the helper signal separator 81a, burst signal separator circuit 812, horizontal signal synchronizing separator 81g, and one contact s1 of the switch SW1. The helper signal separator 81a extracts only the AM modulated helper signal from the input video signal, and supplies that helper signal to the next stage, which is the demodulator circuit 81b. In that circuit, the AM modulated helper signal is subjected to AM demodulation, and the resultant baseband-state helper signal is adjusted in level and supplied to the level adjuster 81c, in which it is combined with a predetermined DC level such as to bring the average signal level to approximately 50 IRE units (i.e. 50% of maximum white level). The resultant signal is supplied to the contact s2 of the switch SW1. Waveforms of that signal, corresponding to the waveforms of the input PALplus signal shown in Fig. 11, are shown in Fig. 12. Here again, for simplicity, only the luminance signal component of the main signal is shown.

The moveable contact s3 of the switch SW1 is connected via the output line 91 to the input of the Y/C separator 82. The moveable contact s3 is normally held connected to the contact s1 of that switch, in which case the input PALplus system video signal is transferred directly from the moveable contact s3 to the Y/C separator 82. Only when a detection signal is produced from the insertion position detection circuit 81h, as described hereinafter, is the switch SW1 changed from the s1 to the s2 contact side, in which case the baseband-state helper signal from the level adjuster 81c is transferred via the switch contacts s2 and s3 to the Y/C separator 82.

The horizontal synchronizing signal separator 81g separates the horizontal synchronizing signal from the input PALplus video signal and supplies the horizontal synchronizing signal to the insertion position detection circuit 81h. The insertion position detection circuit 81h detects, based on the times of occurrence of the horizontal synchronizing signal pulses, helper intervals within the input video signal (e.g. intervals which are each within one of the portion d2 or d3 of the picture shown in diagram (D) Fig. 1, containing no actual picture content, and in which the helper signal is inserted), and generates the detection signal, to set the switch SW1 to the s2 contact position, when occurrence of a helper signal interval is detected.

The demodulator circuit 81b the burst signal separator 81d, the APC (Automatic Phase Control) circuit 81e, and the oscillator circuit 81f are respectively similar in configuration and operation to the frequency converter 65, burst signal separator 76, the APC circuit (made up of the burst signal separator 76, the phase comparator 75, the VXO 74, and the auxiliary frequency converter 73), and the quartz crystal oscillator 77 of the color signal playback system 62 shown in Fig. 7 and described hereinabove. Hence, further description of these will be omitted.

As a result, the helper signal demodulator circuit 81 demodulates the AM modulated helper signal to obtain the baseband-state helper signal, clamps the average level of that signal at a predetermined value (50 I.R.E. units), and transfers the resultant signal to the Y/C separator 82.

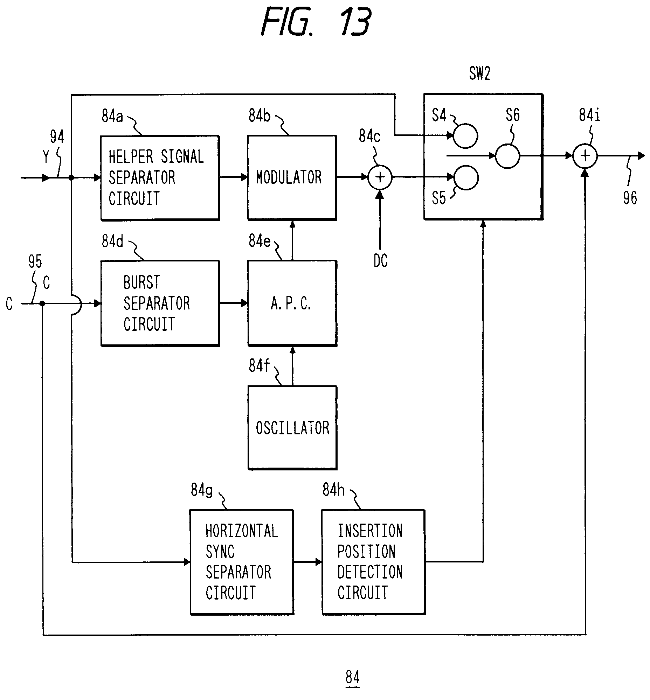

The configuration and operation of the helper signal remodulation circuit 84 in the video signal recording and playback apparatus 80 shown in Fig. 9 will be described referring to Fig. 13. The helper signal remodulation circuit 84 is made up of a helper signal separator circuit 84a, a helper signal modulator 84b, a reference level combining circuit 81c, a color burst signal separator circuit (burst separator) 84d, an APC circuit 84e, an oscillator circuit 84f, n horizontal synchronizing signal separator 84g, an insertion position detection circuit 84h, and a switch SW2. The signal combiner 85 is also shown in Fig. 13.

The operation of the helper signal remodulation circuit 84 is as follows. The playback luminance signal (together with the playback baseband-state helper signal) which is produced from the luminance signal playback system 50 of the VTR signal processing system 83 is supplied via the line 94 to the helper signal separator 84a, the horizontal synchronizing signal separator 84g and to one contact s4 of the switch SW2. The helper signal separator 84a separates the playback baseband-state helper signal from the playback luminance signal and transfers that helper signal to the modulator circuit 84b. In the modulator circuit 84b, the baseband-state helper signal is again applied in AM modulation, by the same method as that described above for generating the original modulated helper signal (i.e. by AM modulation using the color subcarrier frequency), and adjusted in amplitude, with the resultant remodulated helper signal being supplied to the reference level combining circuit 84c in which it is clamped at a predetermined average level and then supplied to the other terminal s5 of the switch SW2.

The moveable contact s6 of switch SW2 is normally held connected to the fixed contact s4, so that the playback luminance signal is supplied directly (i.e. unchanged) via the moveable contact s6 to the signal combiner 85. Only when the detection signal is produced by the insertion position detection circuit 84h, as described hereinafter, is the switch SW2 changed over to the state of connection through the contact s5, in which case the remodulated helper signal produced from the reference level combining circuit 84c is transferred through the contacts s5 and s6 to the signal combiner 85.

The horizontal synchronizing signal separator 84g separates the horizontal synchronizing signal from the playback luminance signal supplied thereto, and supplies the horizontal synchronizing signal to the insertion position detection circuit 84h. The insertion position detection circuit 84h detects the occurrences of helper intervals within the playback video signal, based on the timings of the horizontal synchronizing pulses as described hereinabove, and responds by generating the detection signal, which sets the switch SW2 to the s5 contact side. The remodulated helper signal is thereby inserted into appropriate intervals in the playback luminance signal, with the resultant combined signal being supplied to the second input of the signal combiner 85.

The playback color signal which is produced from the color signal playback system 62 of the VTR signal processing system 83 is supplied to the burst separator 84d and to the signal combiner 85. The burst signal separator 84d, APC circuit 84e, and oscillator circuit 84f have respectively identical configurations and functions to those of the burst separator, APC circuit and oscillator circuit described hereinabove in relation to the helper signal demodulator circuit 81 of Fig. 10, so that further description will be omitted. A carrier signal which is at the color subcarrier frequency and is phase-locked to the playback color burst signal is thereby supplied from the APC 84e to the modulator circuit 84b.

The signal combiner 85 executes frequency multiplexing of the combined playback luminance signal and remodulated helper signal produced from the helper signal remodulation circuit 84 with the playback color signal, to obtain a composite video signal which is substantially identical to the original PALplus video signal prior to recording, i.e. with no significant deterioration of the modulated helper signal. That composite video signal can be supplied via the line 97 to an external apparatus, e.g. to the composite video signal input terminal of a television receiver. It is not essential that the playback luminance and signal color signal be converted to a composite video signal, and it would be equally possible to output these as a Y/C separated video signal. In that case, the respective signals of the Y/C separated video signal (i.e. the output signal from the helper signal remodulation circuit 84 and the playback color signal from the VTR signal processing system 83 in Fig. 9) can be directly connected to an apparatus such as a television receiver having input terminals that are adapted to receive such a Y/C separated video signal. Such a television receiver will provide improved playback picture quality, by comparison with a receiver which operates from a composite video signal.

Since the helper signal demodulator circuit 81 and helper signal remodulation circuit 84 execute substantially the same signal processing, these can be implemented by a common circuit. In that case, for example, the helper signal demodulator circuit 81 (or helper signal remodulation circuit 84) will execute both helper signal demodulation during VTR recording and helper signal remodulation during VTR playback, i.e. will execute helper signal demodulation prior to recording by the VTR, and helper signal remodulation following VTR playback.

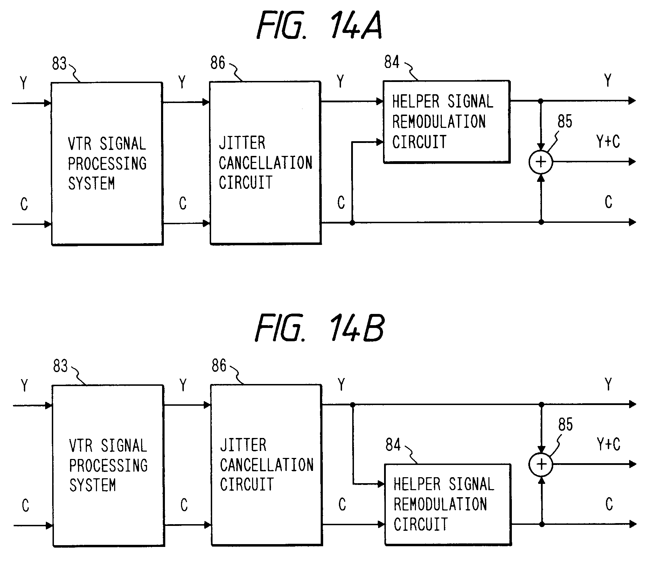

The playback luminance signal and playback color signal from the luminance signal playback system 50 and the color signal playback system 62 of the VTR signal processing system 83 contain superimposed jitter, as a result of the recording and playback processing by the VTR signal processing system 83. Improved performance can be achieved by cancelling out the jitter prior to supplying the playback luminance signal and playback color signal to the helper signal remodulation circuit 84. That is to say, if the jitter is eliminated, the phase of the remodulated helper signal can be accurately matched to the phase of the playback color burst signal. To achieve that, the helper signal remodulation circuit 84 can be modified as shown in Fig. 14A or 14B, with a jitter elimination circuit 86 being inserted between the output side of the VTR signal processing system 83 and the input side of the helper signal remodulation circuit 84, for removing jitter from the playback luminance signal and color signal. In that case, the playback luminance signal and playback color signal, with phase matching achieved due to jitter removal by the jitter elimination circuit 86, are supplied to the helper signal remodulation circuit 84. In the case of Fig. 14A, the playback color signal (with jitter removed) is supplied as one input to the signal combiner 85, whereas with Fig. 14B, the playback luminance signal, with jitter removed, is supplied as one input to the signal combiner 85.

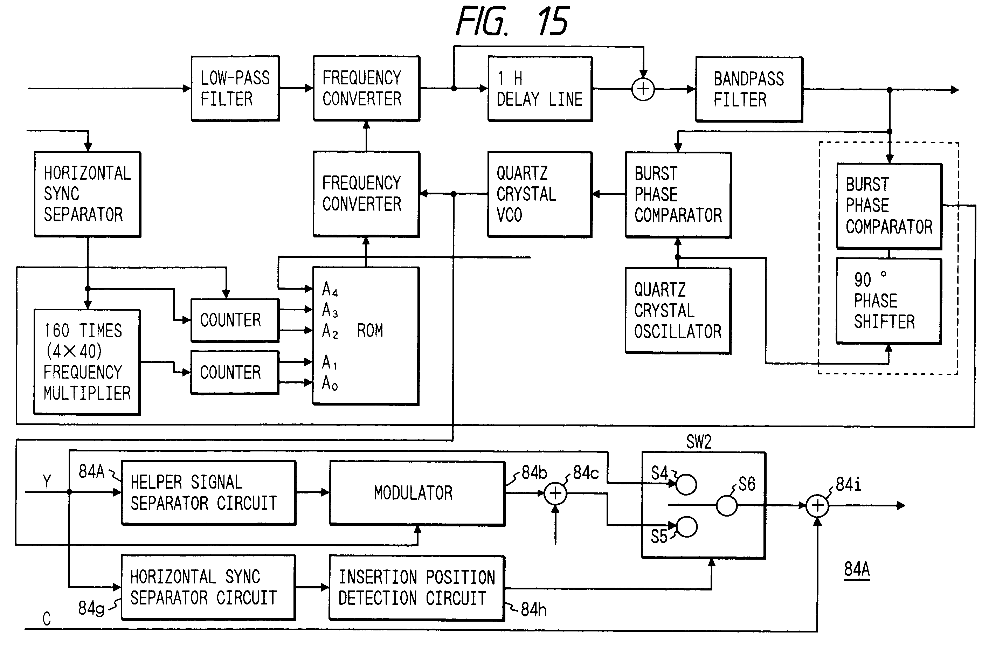

Furthermore, with the helper signal remodulation circuit 84 shown in Fig. 13, the color burst signal is separated from the playback color signal which is produced from color signal playback system (corresponding to the color signal playback system 62 in Fig. 7) of the VTR signal processing system 83, and the separated color burst signal is used to phase-synchronize the modulation carrier signal which is produced based on the output signal from the oscillator 84f. However it would be equally possible to supply the modulation carrier signal, at the color subcarrier frequency, to the modulator circuit 84b from some other source. That is illustrated by another embodiment of the helper signal remodulation circuit 84, designated as helper signal demodulation circuit 84A, shown in Fig. 15. In that embodiment, an oscillation signal is produced from a quartz crystal VCO within the color signal playback system of the VTR, for use in generating a signal that is used in frequency up-conversion of the playback color signal, and that oscillation signal is also utilized as the modulation carrier signal of the modulator circuit 84b.

In all other respects, the operation of the circuit 84A is identical to that of the helper signal remodulation circuit 84 which has been described above.

Although the invention has been described in the above for the case of the PALplus television system, the invention is not limited to such applications and is equally applicable for example to the EDTV2 system.

As described in the above, the present invention provides a video signal recording and playback apparatus for recording and playback of a video signal, using a predetermined video signal broadcasting system, wherein the video signal consists of a main signal and a helper signal which has been derived by modulation of a helper signal that is in baseband signal form, the helper signal containing information for augmenting the main signal, and wherein the main signal is compatible with said predetermined video signal broadcasting system and consists of a sequence of high quality picture signals having an aspect ratio that is different from an aspect ratio of said predetermined video signal broadcasting system. The video signal recording and playback apparatus comprises demodulation means for demodulating the modulated helper signal of the video signal to obtain the helper signal in the baseband signal state, recording and playback means for recording and playback of a video signal which contains at least the baseband-state helper signal and main signal, and remodulation means for again modulating the baseband-state helper signal that is obtained at output from the recording and playback means, to obtain a playback video signal which contains the main signal and remodulated helper signal. An improvement in vertical resolution can thereby be obtained for a television picture produced from the playback video signal, since accurate compensation of the main signal can be achieved using the remodulated helper signal. That is made possible, since there is no significant deterioration (such as bandwidth reduction) in the remodulated helper signal produced by the apparatus, by comparison with the original modulated helper signal prior to recording and playback.

It can be further understood that such a video signal recording and playback apparatus can be implemented simply by adding the helper signal demodulator circuit 81 and helper signal remodulation circuit 84 shown in Fig. 9 to a conventional VTR, at the input side and output side of the VTR respectively, with no changes being necessary in the circuits or operation of the conventional VTR itself. Furthermore, a single circuit can be used in common to implement the functions of both the helper signal demodulator circuit 81 and helper signal remodulation circuit 84.

## Claims

1. A video signal recording and playback apparatus for recording and playback of a first type of video signal which is in accordance with a predetermined television broadcasting system and of a second type of video signal, said second type of video signal comprising a main signal and a modulated helper signal, said modulated helper signal having been derived by modulation using a baseband-state helper signal, said main signal being compatible with said predetermined television broadcasting system and expressing successive pictures having a larger value of aspect ratio than an aspect ratio of pictures expressed by said first type of video signal, said modulated helper signal expressing auxiliary information relating to said main signal, wherein said video signal recording and playback apparatus comprises:
demodulator means (81) for demodulating said modulated helper signal to obtain said baseband-state helper signal;
recording and playback means (82, 83) for recording and subsequent playback of at least said baseband-state helper signal, to obtain a playback video signal comprising at least a playback baseband-state helper signal; and
remodulation means (84) for executing modulation using said playback baseband-state helper signal, to obtain a playback video signal which contains at least a remodulated helper signal.

2. A video signal recording and playback apparatus according to claim 1, wherein said recording and playback means comprises a luminance signal processing system and a color signal processing system, said main signal comprises a luminance signal and a color signal, wherein said remodulation means executes said modulating by said playback baseband-state helper signal using a modulation carrier signal having a frequency which is identical to a color subcarrier frequency of said predetermined television broadcasting system, and wherein said recording and playback means executes recording and playback of said baseband-state helper signal through said luminance signal processing system

3. A video signal recording and playback apparatus according to claim 2, wherein said playback video signal includes a color burst signal, further comprising circuit means for deriving said modulation carrier signal as a signal which is synchronized with said color burst signal of the playback video signal.

4. A video signal recording and playback apparatus according to claim 2 or 3, wherein said playback color signal is a frequency down-converted color signal and said apparatus includes frequency converter means for executing frequency up-conversion of said playback color signal and oscillator means for supplying a phase-controlled oscillation signal to operate said frequency converter means, and wherein said phase-controlled oscillation signal is further utilized as said modulation carrier signal.

5. A video signal recording and playback apparatus according to claim 2, 3 or 4, wherein said modulated helper signal occurs at a fixed position within a portion of each frame period of said second type of video signal, and wherein said demodulator means comprises a demodulator circuit for converting said modulated helper signal to said baseband-state helper signal and a first combining circuit for combining said baseband-state helper signal with said video signal prior to recording by said recording and playback means, wherein said first combining circuit comprises:
first insertion position detection means responsive to said second type of video signal for producing a first detection signal to indicate each occurrence of said modulated helper signal within said video signal; and
first insertion means responsive to said first detection signal for selectively inserting said baseband-state helper signal from said demodulation means into said video signal, at said fixed position within each frame, to replace said modulated helper signal;
and wherein said remodulation means comprises a modulator circuit for converting said playback baseband-state helper signal to said remodulated helper signal and a second combining circuit for combining said remodulated helper signal with said playback video signal, said second combining circuit comprising:
second insertion position detection means responsive to said playback video signal for producing a second detection signal to indicate each occurrence of said playback baseband-state helper signal within said playback video signal; and
second insertion means responsive to said second detection signal for selectively inserting said remodulated helper signal into said playback video signal, at said each occurrence, to replace said playback baseband-state helper signal.

6. A video signal recording and playback apparatus according to claim 1, 2, 3, 4 or 5, wherein said demodulation means is connected to supply an input video signal to said recording and playback means, and wherein said modulation means is connected to receive an output video signal from said recording and playback means.
